# EUROPÄISCHE PATENTSCHRIFT

(11) **EP 3 598 891 B1**
(45) Veröffentlichungstag und Bekanntmachung des Hinweises auf die Patenterteilung: **05.06.2024**
(21) Anmeldenummer: 19171601.8
(22) Anmeldetag: 29.04.2019
(51) Int. Cl.: A01G 24/20, A01G 24/22, A01G 24/27, C05F 1/00, C05F 11/00, C05F 11/02, C05F 11/04

(54) **MITTEL ZUR VERWENDUNG ALS TORFERSATZ, ZUSATZ ZU PFLANZENERDE ODER ZUR BODENVERBESSERUNG**
COMPOSITION FOR USE AS A PEAT SUBSTITUTE, ADDITIVE FOR PLANT SOIL OR FOR SOIL IMPROVEMENT
MOYEN DESTINÉ À ÊTRE UTILISÉ COMME TOURBE DE SUBSTITUTION, AJOUT À UN TERREAU POUR PLANTES OU DESTINÉ À L'AMÉLIORATION DE LA TERRE

(30) Priorität: 24.07.2018 DE 102018005805
(43) Veröffentlichungstag der Anmeldung: 29.01.2020
(73) Patentinhaber: Propfe, Herbert, 68163 Mannheim (DE)
(72) Erfinder: Propfe, Herbert, 68163 Mannheim (DE)
(74) Vertreter: Kesselhut, Wolf

(56) Entgegenhaltungen:
- WO-A1-95/19328
- DE-A1- 19 858 979
- DE-U1-202014 006 943
- DATABASE WPI Week 200026 Thomson Scientific, London, GB; AN 2000-301619 XP002796066, & RU 2 130 003 C1 (ORLOV AGRIC ACAD) 10. Mai 1999 (1999-05-10) & RU 2 130 003 C1 (AKADEMIJA A; ORLOVSKAJA G SEL SKOKHOZJAJSTV) 10. Mai 1999 (1999-05-10)
- DATABASE WPI Week 201536 Thomson Scientific, London, GB; AN 2015-305844 XP002796067, & KR 101 518 426 B1 (KIGAM KOREA INST GEOSCIENCE & MINERAL) 11. Mai 2015 (2015-05-11) & KR 101 518 426 B1 (KOREA INST GEOSCIENCE & MINERA [KR]) 11. Mai 2015 (2015-05-11)
- GUPTA ADITI ET AL: "Yield and nutritional content ofPleurotus sajor cajuon wheat straw supplemented with raw and detoxified mahua cake", FOOD CHEMISTRY, ELSEVIER LTD, NL, Bd. 141, Nr. 4, 4. Juli 2013 (2013-07-04), Seiten 4231-4239, XP028705312, ISSN: 0308-8146, DOI: 10.1016/J.FOODCHEM.2013.06.126
- DATABASE WPI Week 200471 Thomson Scientific, London, GB; AN 2004-726310 XP002796068, & KR 2004 0055955 A (SUNG WOO LANDSCAPE CO LTD) 30. Juni 2004 (2004-06-30) & KR 2004 0055955 A (SUNG WOO LANDSCAPE CO LTD) 30. Juni 2004 (2004-06-30)
- DATABASE WPI Week 200906 Thomson Scientific, London, GB; AN 2009-B05353 XP002796069, & KR 100 847 086 B1 (WA SAENG NOGHWA IND CO LTD) 17. Juli 2008 (2008-07-17) & KR 100 847 086 B1 (WA SAENG NOGHWA IND CO LTD [KR]) 17. Juli 2008 (2008-07-17)

## Beschreibung

Die vorliegende Erfindung betrifft einen Torfersatz gemäß dem Oberbegriff von Anspruch 1 sowie die Verwendung desselben als Zusatz zu Pflanzenerde oder als Bodenverbesserungsmittel, sowie eine Pflanzerde, enthaltend einen solchen Torfersatz.

Gegenwärtig ist Torf im Erwerbsgartenbau, aber auch im Hobbygartenbau der wichtigste Rohstoff zur Herstellung von Pflanzerden und Bodenverbesserungsmitteln. Die Bemühungen im Naturschutz und bei der nachhaltigen Verwendung von natürlichen Rohstoffen haben die Einschränkung oder sogar die Einstellung des Torfabbaus zum Ziel. Es werden daher große Anstrengungen unternommen, geeignete Ersatzstoffe für Torf zu entwickeln. Diese sollten weitgehend natürlichen Ursprungs sein.

Verschiedenen Fachpublikationen ist zu entnehmen, dass bis heute verschiedenartige Produkte als "Torfersatz" eingesetzt werden. Dabei kommen beispielsweise Steinwolle, Kunststoffgranulate, Reisspelzen, Rindenkompost, Kokosfasern, aufgeschlossene Holzfasern und Hobelspäne zum Einsatz. Keines der bisher empfohlenen Produkte weist jedoch alle wesentlichen charakteristischen Eigenschaften von wenig zersetztem Hochmoortorf auf, wie eine geringe mikrobiologische Aktivität, eine Freiheit von Krankheitserregern, einen hohen Gehalt an wertvoller organischer Substanz, einen pflanzenphysiologisch günstigen pH -Wert sowie eine gute Abbauresistenz während der Lagerung.

Es ist aus der landwirtschaftlichen Praxis bekannt, dass Stroh zur Verbesserung des Bodens beitragen kann. Einerseits kann durch Strohzufuhr die Humusbilanz verbessert werden; und es lässt sich bei sachgemäßer Aufbereitung eine Strukturverbesserung erreichen. Andererseits ist bekannt, dass bei der Einbringung von Stroh gewisse Nachteile auftreten können. Zum einen kann es zu einer so genannten "Matratzenbildung" kommen, falls das Stroh nicht genügend zerkleinert ist und durch fehlende Ausgleichsdringung keine ausreichende Zersetzung des Strohes erfolgt.

Es wird daher beschrieben, dass Stroh bei der Einbringung in den Boden mit einer gewissen Düngermenge, insbesondere Stickstoff, versehen werden sollte, um die Nachteile der so genannten N-Sperre (Stickstoffsperre) zu vermeiden. N-Sperre bedeutet, dass beim Zersetzungsprozess des Strohes die dabei aktiven Mikroorganismen vorrübergehend Stickstoff binden, der dann der Pflanze fehlt. Landwirte bringen daher im Rahmen der so genannten Strohausgleichsdüngung neben dem Stroh üblicherweise stickstoffhaltige Materialien wie Gülle, Jauche oder mineralische Dünger aus. Dabei setzt unmittelbar nach dem Einbringen der stickstoffhaltigen Materialien eine beschleunigte Zersetzung des Strohes im Boden ein.

Die WO 95/19328 offenbart einen Torfersatz, der im Wesentlichen frei ist von synthetischem Dünger und von tierischen Exkrementen, umfassend:
(a) zerfasertes Stroh,
(b) wenigstens ein rein-organisches Düngemittel in Form von Hornspänen, Hornmehl oder Blutmehl und
(c) 0,5 bis 12 Gew.-% Wasser, wobei das C/N-Verhältnis im Bereich von 40:1 bis 20:1 liegt (vgl. Tabelle 2).

Weiterhin beschreibt die DE 20 2014 006943 U1 einen Bodenhilfsstoff, der zerfasertes Stroh und Kokosfasern enthält.

Aus der RU 2 130 003 C1 ist ferner ein Dünger aus Stroh, Getreide und/oder Hülsenfrüchten bekannt.

Die KR 101 518 426 B1 offenbart ein Vegetationsgrundmaterial, welches aus Reisstroh hergestellte Strohhalmspäne und Mais und/oder pulverisiertes Maispulver enthält.

Das Dokument GUPTA ADITI ET AL, "Yield and nutritional content of Pleurotus sajor cajuon wheat straw supplemented with raw and detoxified mahua cake" beschreibt die Wirkung des Zusatzes von rohem/entgiftetem Mahuakuchen zu Weizenstroh und dessen Auswirkung auf den Ertrag des Pilzes Pleurotus sajor caju.

Aus der KR 2004 0055955 A ist eine Pflanzzusammensetzung zum Begrünen eines Abhangs bekannt, die 30 bis 35 Gew.-% frisches Reisstroh, 15 bis 20 Gew.-% Ballaststoffe, 5 bis 10 Gew.-% Reisschalen, 3 bis 5 Gew.-% Baumwolle, 10 bis 15 Gew.-% Klebstoff, 10 bis 15 Gew.-% Verbunddünger und 15 bis 20 Gew .-% gelbes Bodenpulver enthält.

Schließlich offenbart die KR 100 847 086 B ein Verfahren zur Herstellung von Pflanzerde für Hangplantagen unter Verwendung von wasserlöslichem organischem Dünger, Reisstroh, Weizenmehl und Vermiculit.

Ein Torfersatz, in dem ein organisches Düngemittel in flüssiger Form homogen auf zerfasertem Stroh verteilt ist, ist in keinem der zuvor genannten Dokumente offenbart.

Aufgabe der vorliegenden Erfindung ist es, einen alternativen Torfersatz zu schaffen, der lagerfähig ist und erst zu einem gewünschten Zeitpunkt, nämlich dann, wenn er in den Boden eingebracht wird, durch die Bodenfeuchte initiiert, mikrobiell zersetzt wird. Weiterhin ist es Aufgabe der Erfindung, einen Torfersatz zu schaffen, der im Wesentlichen frei ist von synthetischen Stickstoffverbindungen und im Wesentlichen frei ist von tierischen Exkrementen.

Gelöst wird diese Aufgabe durch einen Torfersatz mit den Merkmalen von Anspruch 1.

Mit dem erfindungsgemäßen Torfersatz wird ein Ersatzprodukt für natürlichen Torf zur Verfügung gestellt, das lagerfähig ist und erst zu einem gewünschten Zeitpunkt, nämlich dann, wenn es in den Boden eingebracht wird, durch die Bodenfeuchte initiiert, mikrobiell zersetzt wird. Wie der Anmelder gefunden hat, führen sowohl die Verwendung von Stroh in zerfaserter Form, als auch das vorteilhafte C/N-Verhältnis, erreicht durch den Zusatz des rein-organischen Düngemittels im Bereich von 40:1 bis 20:1 in vorteilhafter Weise zu einer schnellen Verrottung, sowie der Aufhebung der sogenannten N-Sperre, nachdem der erfindungsgemäße, zunächst lagerfähige Torfersatz in den zu düngenden Boden eingebracht wurde.

Torfersatz, der im Wesentlichen frei ist von synthetischem Dünger, bedeutet im Rahmen der vorliegenden Erfindung, dass der Torfersatz synthetischen Dünger, beispielsweise Dünger bzw. Düngemittel auf Basis synthetisch hergestellter Stickstoff verbindungen, in einer Menge von weniger als 0,5 Gew.-%, bevorzugt in einer Menge von weniger als 0,3 Gew.-%, bezogen auf die Gesamtmenge an Torfersatz, enthält.

Torfersatz, der im Wesentlichen frei ist von tierischen Exkrementen, bedeutet im Rahmen der vorliegenden Erfindung, dass der Torfersatz tierische Exkremente in einer Menge von weniger als 0,5 Gew.-%, bevorzugt in einer Menge von weniger als 0,3 Gew.-%, bezogen auf die Gesamtmenge an Torfersatz, enthält. Der Torfersatz ist somit im Wesentlichen frei von Stoffen, die unerwünschte lebende, möglicherweise pathogene Keime enthalten können.

Der erfindungsgemäße Torfersatz enthält als Komponente (a) zerfasertes Stroh. Strohhalme besitzen auf ihrer äußeren Seite eine wachsartige Schicht, die eine Benetzung und damit auch eine rasche Zersetzung durch Mikroorganismen verhindert. Zur schnelleren Rotte wird daher Stroh in zerfaserter und gegebenenfalls auch in zerschnittener Form eingesetzt, wobei die Innenseite der Strohhalme eröffnet und der Zugang für Mikroorganismen ermöglicht wird. Die Zerfaserung des Strohs wird üblicherweise in einer dem Fachmann bekannten Vorrichtung, beispielsweise einer Strohmühle oder einem Häcksler vorgenommen.

Die Länge des zerfaserten Strohs kann über weite Bereiche hinweg variieren. Allgemein weist das zerfaserte Stroh eine durchschnittliche Länge von 5 bis 50 mm, bevorzugt eine durchschnittliche Länge von 10 bis 20 mm auf.

Gemäß der Erfindung ist das Stroh wenigstens ein Stroh der Pflanzenarten, Roggen, Weizen, Hafer und Gerste oder eine Mischung davon.

Der erfindungsgemäße Torfersatz enthält als Komponente (b) wenigstens ein rein-organisches Düngemittel. Der Begriff "Rein-organisches Düngemittel" bedeutet ein Düngemittel, dass unter den folgenden drei Gruppen subsumiert werden kann:
I Organische Handelsdüngemittel tierischer Herkunft, wie Proteinhydrolysate tierischer Herkunft, insbesondere Proteinhydrolysate, hergestellt aus keratinhaltigen Substraten, wie Horn, Hufen, Leder, Wolle und/oder Federn,
II Organische Handelsdüngemittel pflanzlicher Herkunft, wie insbesondere Vinasse, Kartoffelfruchtwasser und Konzentrate, Reststoffe der Maisverarbeitung, Schlempen und
III sonstige organische Düngemittel, wie insbesondere Biotrissol, hydrolisierte Proteine, wie Protan.

Bei dem rein-organischen Düngemittel handelt es sich bevorzugt um ein Düngemittel, das im ökologischen Landbau bzw. Biolandbau zulässig ist. Das rein-organische Düngemittel ist bevorzugt frei von synthetischen Stickstoffverbindungen oder sonstigen synthetischen düngenden Stoffen und hat keine chemische Bearbeitung erfahren.

Gemäß der Erfindung ist die Komponente (b), das rein-organische Düngemittel, ein fermentierter Pflanzenextrakt oder ein Protein-Hydrolysat (tierischer und/oder pflanzlicher Herkunft) oder eine Mischung davon.

Um eine möglichst homogene bzw. gleichmäßige Beladung des zerfaserten Strohs mit dem rein-organischen Düngemittel zu erreichen, ist das rein-organische Düngemittel, das heißt die Komponente (b), homogen/gleichmäßig auf dem zerfaserten Stroh, das heißt der Komponente (a), in flüssiger Form verteilt und haftet idealerweise auf diesem.

Im Rahmen der Herstellung des erfindungsgemäßen Torfersatzes erfolgt die Zerfaserung bzw. Zerkleinerung des Strohs üblicherweise in einer Strohmühle. Bevorzugt wird nach der Zerfaserung in einer, der Strohmühle nachgeschalteten Mischvorrichtung über ein installiertes Sprühsystem das zerfaserte Stroh mit dem rein-organischen Düngemittel besprüht und vermischt. Hierdurch wird eine homogene Verteilung des rein-organischen Düngemittels auf dem zerfaserten Stroh erreicht.

Der erfindungsgemäße Torfersatz weist unmittelbar nach der Herstellung einen Wassergehalt von etwa 5 bis 12 Gew.-% auf. Dieser kann sich jedoch während der Lagerung durch Trocknung verringern. Der erfindungsgemäße Torfersatz enthält daher als Komponente (c) 0,5 bis 12 Gew.-% Wasser, bevorzugt 5 bis 12 Gew.-%, besonders bevorzugt 8 bis 12 Gew.-% Wasser, jeweils bezogen auf den gesamten Torfersatz. Im Rahmen der Erfindung hat es sich dabei herausgestellt, dass der fertige Torfersatz nur dann ausreichend lagerfähig ist und nicht während der Lagerung in Rotte übergeht, wenn der Wassergehalt in dem fertigen Produkt maximal 12 Gew.-%, bezogen auf das fertige Produkt, beträgt. Vorteilhafterweise wird dadurch ein Torfersatz erhalten, der erst nach der Anwendung als Zusatz zu Pflanzenerde oder als Bodenverbesserungsmittel im Boden zersetzt wird. Der beschriebene Wassergehalt wird durch die Ausgangsfeuchte des Strohes von etwa 4 bis 5 Gew.-% und durch die Zugabe des flüssigen rein-organischen Düngemittels erreicht. Das Düngemittel hat bei der Zugabe zu dem zerfaserten Stroh bevorzugt einen Feststoffgehalt von 55 bis 65 Gew.-% und einen entsprechenden Wassergehalt von 45 bis 35 Gew.-%.

Der erfindungsgemäße Torfersatz ist dadurch gekennzeichnet, dass das C/N Verhältnis, das heißt das Gewichtsverhältnis von Kohlenstoff (C) zu Stickstoff (N), in dem Torfersatz allgemein im Bereich von 40:1 bis 20:1, besonders bevorzugt im Bereich von 30:1 bis 25:1 liegt. Hierdurch wird in vorteilhafter Weise die so genannte N-Sperre (Stickstoffsperre) aufgehoben, so dass es während der Zersetzung des Strohes durch Mikroorganismen im Boden zu keinem Stickstoffmangel bei den Kulturpflanzen kommt, die in dem mit dem Torfersatz vermengten Boden wachsen.

Der Anteil der in dem erfindungsgemäßen Torfersatz enthaltenen Komponenten (a) und (b) kann über weite Bereiche hinweg variieren. Gemäß einer bevorzugten Ausführungsform der Erfindung enthält der Torfersatz die Komponente (a) im Bereich von 80 bis 95 Gew.-%, bevorzugt im Bereich von 85 bis 91 Gew.-% und die Komponente (b) im Bereich von 5 bis 20 Gew.-%, bevorzugt im Bereich von 9 bis 15 Gew.-%, jeweils bezogen auf die Summe der Komponenten (a) und (b).

Beim erfindungsgemäßen Torfersatz, bei dem als rein-organisches Düngemittel ein Düngemittel auf pflanzlicher Basis eingesetzt wird, beträgt der Anteil der Komponente (a) allgemein 90 bis 95 Gew.-% und der Anteil der Komponente (b) allgemein 5 bis 10 Gew.-%, jeweils bezogen auf die Summe der Komponenten (a) und (b)

Wird als rein-organisches Düngemittel ein Düngemittel auf tierischer Basis eingesetzt, so beträgt der Anteil der Komponente (a) allgemein 92 bis 94 Gew.-% und der Anteil der Komponente (b) allgemein 6 bis 8 Gew.-%, jeweils bezogen auf die Summe der Komponenten (a) und (b).

Die vorliegende Erfindung betrifft ferner die Verwendung des vorstehend charakterisierten Torfersatzes als Zusatz zu Pflanzenerde oder als Bodenverbesserungsmittel,

Die Erfindung betrifft ferner eine Pflanzerde, enthaltend den vorstehend charakterisierten Torfersatz. Der Gehalt an Torfersatz kann dabei über weite Bereiche hinweg variieren. Allgemein ist der Torfersatz in einem Anteil von 10 bis 20 Gew.-% in der Pflanzerde enthalten. Die Erde, die den erfindungsgemäßen Torfersatz in einem Anteil von 10 bis 20 Gew.-% enthält, entspricht einer aufgedüngten, so genannten TKS-Erde (Torfkultursubstrat-Erde).

## Patentansprüche

1. Torfersatz, der im Wesentlichen frei ist von synthetischem Dünger und im Wesentlichen frei ist von tierischen Exkrementen, umfassend:
(a) zerfasertes Stroh,
(b) wenigstens ein rein-organisches Düngemittel, das homogen auf dem zerfaserten Stroh in flüssiger Form verteilt ist, und
(c) 0,5 bis 12 Gew.-% Wasser,
**dadurch gekennzeichnet, dass** das C/N Verhältnis, das Gewichtsverhältnis von Kohlenstoff (C) zu Stickstoff (N), in dem Torfersatz im Bereich von 40:1 bis 20:1 liegt, und dass das rein-organische Düngemittel ein fermentiertes Pflanzenextrakt oder ein Protein-Hydrolysat oder eine Mischung davon ist.

2. Torfersatz nach Anspruch 1, **dadurch gekennzeichnet, dass** das zerfaserte Stroh eine durchschnittliche Länge von 5 bis 50 mm aufweist.

3. Torfersatz nach Anspruch 1 oder 2, **dadurch gekennzeichnet, dass** der Torfersatz 5 bis 12 Gew.-%, bevorzugt von 8 bis 12 Gew.-% Wasser enthält.

4. Torfersatz nach einem der Ansprüche 1 bis 3 **dadurch gekennzeichnet, dass** dieser die Komponente (a) im Bereich von 80 bis 95 Gew.-% und die Komponente (b) im Bereich von 5 bis 20 Gew.-%, jeweils bezogen auf die Summe der Komponenten (a) und (b), enthält.

5. Verwendung eines Torfersatzes gemäß einem der Ansprüche 1 bis 4 als Zusatz zu Pflanzenerde oder als Bodenverbesserungsmittel.

6. Pflanzerde, enthaltend einen Torfersatz gemäß einem der Ansprüche 1 bis 4.

## Claims

1. Peat substitute which is substantially free of synthetic fertilizer and is substantially free of animal excreta, comprising:
(a) defibrated straw,
(b) at least one purely organic fertilizer homogeneously distributed in liquid form on the defibrated straw, and
(c) 0.5% to 12% by weight of water,
**characterized in that** the C/N ratio, the weight ratio of carbon (C) to nitrogen (N), in the peat substitute is in the range from 40:1 to 20:1, and **in that** the purely organic fertilizer is a fermented plant extract or a protein hydrolysate or a mixture thereof.

2. Peat substitute according to Claim 1, **characterized in that** the defibrated straw has an average length of 5 to 50 mm.

3. Peat substitute according to Claim 1 or 2, **characterized in that** the peat substitute contains 5% to 12% by weight and preferably 8% to 12% by weight of water.

4. Peat substitute according to any of Claims 1 to 3, **characterized in that** it contains component (a) in the range from 80% to 95% by weight and component (b) in the range from 5% to 20% by weight, based in each case on the sum total of components (a) and (b) .

5. Use of a peat substitute according to any of Claims 1 to 4 as an addition to plant soil or as a soil improver.

6. Plant soil containing a peat substitute according to any of Claims 1 to 4.

## Revendications

1. Tourbe de substitution qui est essentiellement exempte d'engrais synthétique et essentiellement exempte d'excréments animaux, comprenant :
(a) de la paille déchiquetée,
(b) au moins un engrais purement organique, qui est réparti de manière homogène sous forme liquide sur la paille déchiquetée et
(c) 0,5 à 12% en poids d'eau,
**caractérisée en ce que** le rapport C/N, le rapport en poids de carbone (C) à azote (N), dans la tourbe de substitution se situe dans la plage de 40:1 à 20:1 et **en ce que** l'engrais purement organique est un extrait végétal fermenté ou un hydrolysat protéinique ou un mélange de ceux-ci.

2. Tourbe de substitution selon la revendication 1, **caractérisée en ce que** la paille déchiquetée présente une longueur moyenne de 5 à 50 mm.

3. Tourbe de substitution selon la revendication 1 ou 2, **caractérisée en ce que** la tourbe de substitution contient 5 à 12% en poids, de préférence 8 à 12% en poids d'eau.

4. Tourbe de substitution selon l'une des revendications 1 à 3, **caractérisée en ce que** celle-ci contient le composant (a) dans la plage de 80 à 95% en poids et le composant (b) dans la plage de 5 à 20% en poids, à chaque fois par rapport à la somme des composants (a) et (b) .

5. Utilisation d'une tourbe de substitution selon l'une des revendications 1 à 4 comme additif à du terreau ou comme agent d'amélioration du sol.

6. Terreau, contenant une tourbe de substitution selon l'une des revendications 1 à 4.
